# EUROPÄISCHE PATENTANMELDUNG

(11) **EP 3 708 411 A1**
(43) Veröffentlichungstag der Anmeldung: **16.09.2020**
(21) Anmeldenummer: 20157091.8
(22) Anmeldetag: 13.02.2020
(51) Int. Cl.: B60L 53/18, B60L 53/30, B60L 53/66

(54) **VERFAHREN ZUM INFORMATIONSAUSTAUSCH ZWISCHEN EINER LADESTATION UND EINEM FAHRZEUG WÄHREND EINEM LADEVORGANG**

(30) Priorität: 13.03.2019 DE 102019203390
(71) Anmelder: Audi AG, 85045 Ingolstadt (DE)
(72) Erfinder: Brok, Tobias, 85092 Kösching (DE)

(57) **Zusammenfassung**

Die Erfindung betrifft ein Verfahren zum Laden einer Batterie (4) eines Fahrzeugs (2) unter Verwendung einer Ladestation (6), wobei die Ladestation (6) eine elektrische Energiequelle (8) und eine Datenquelle (10) aufweist, wobei in einem Innenraum des Fahrzeugs (2) ein Ausgabegerät (14) angeordnet wird, das zur Ausgabe von akustischen Signalen ausgebildet ist, wobei zwischen der Energiequelle (8) der Ladestation (6) und der Batterie (4) des Fahrzeugs (2) eine erste Verbindung (18) zur Übertragung von elektrischer Energie bereitgestellt wird, wobei zwischen der Datenquelle (10) der Ladestation (6) und dem Ausgabegerät (14) in dem Fahrzeug (2) eine zweite Verbindung (20, 22) zur Übertragung von Daten bereitgestellt wird, wobei die elektrische Energie über die erste Verbindung (18) von der Energiequelle (8) zu der Batterie (4) übertragen wird, und wobei Daten für akustische Signale über die zweite Verbindung (20, 22) von der Datenquelle (10) zu dem Ausgabegerät (14) übertragen werden, wobei von dem Ausgabegerät (14) auf Grundlage der empfangenen Daten akustische Signale ausgegeben werden.

## Beschreibung

Die Erfindung betrifft ein Verfahren zum Laden einer Batterie eines Fahrzeugs und ein System zum Laden einer Batterie eines Fahrzeugs.

Um eine Batterie eines Fahrzeugs zu laden, ist diese an eine Energiequelle einer Ladestation anzuschließen. Ein dabei durchführbarer Ladevorgang kann einige Minuten dauern. Währenddessen sollte eine Zeit eines Fahrers des Fahrzeugs sinnvoll genutzt werden, indem diesem Informationen und dergleichen bereitgestellt werden.

Die Druckschrift US 2011/204847 A1 beschreibt ein Werbesystem für eine Ladestation für ein Elektrofahrzeug.

Eine Ladestation für ein Elektrofahrzeug mit einem Werbeterminal ist aus der Druckschrift CN 101728593 A bekannt.

Ein Verkaufssystem für elektrischen Strom für ein Elektro- oder Hybridfahrzeug ist in der Druckschrift US 2013/035786 A1 beschrieben.

Außerdem ist aus der Druckschrift DE 10 2011 056 651 A1 bekannt, dass eine Ladeeinrichtung für ein Elektrofahrzeug eine Computersäule und mindestens ein Ladesteuermodul mit einer Steckdose aufweist.

Vor diesem Hintergrund war es eine Aufgabe, einen Ladevorgang zum Laden einer Batterie eines Fahrzeugs für einen Fahrer vorteilhaft zu gestalten.

Diese Aufgabe wird durch ein Verfahren und ein System mit den Merkmalen der unabhängigen Patentansprüche gelöst. Ausführungsformen des Verfahrens und des Systems gehen aus den abhängigen Patentansprüchen hervor.

Das erfindungsgemäße Verfahren ist zum Laden einer Batterie eines Fahrzeugs unter Verwendung einer Ladestation vorgesehen, wobei die Ladestation eine elektrische Energiequelle und eine Datenquelle aufweist bzw. umfasst, wobei das Fahrzeug die Batterie aufweist, wobei in einem Innenraum des Fahrzeugs ein Ausgabegerät angeordnet wird, das zur Ausgabe von akustischen Signalen ausgebildet ist. Dabei wird zwischen der Energiequelle der Ladestation und der Batterie des Fahrzeugs eine erste Verbindung zur Übertragung von elektrischer Energie und zwischen der Datenquelle der Ladestation und dem Ausgabegerät in dem Fahrzeug eine zweite Verbindung zur Übertragung von Daten bereitgestellt. Außerdem wird die elektrische Energie über die erste Verbindung von der Energiequelle zu der Batterie übertragen. Im Wesentlichen gleichzeitig bzw. zugleich werden Daten für akustische Signale über die zweite Verbindung von der Datenquelle zu dem Ausgabegerät in dem Innenraum übertragen, wobei von dem Ausgabegerät auf Grundlage der empfangenen Daten akustische Signale in den Innenraum des Fahrzeugs ausgegeben werden, die von einem Fahrer als Insassen des Fahrzeugs gehört werden können.

Hierbei ist es möglich, dass die akustischen Daten und/oder Signale Informationen zu einem Ladevorgang, bspw. zu einem Fortschritt oder einer Restdauer des Ladevorgangs, zum Laden der Batterie mit elektrischer Energie umfassen.

Es kann ein Ausgabegerät verwendet werden, das mindestens einen Lautsprecher und/oder mindestens eine Schallquelle aufweist bzw. umfasst, der bzw. die dazu ausgebildet ist, die Daten für die akustischen Signale in die akustischen Signale zu wandeln und/oder umzuwandeln. Dabei ist es möglich, dass das Ausgabegerät in dem Fahrzeug fest angeordnet bzw. installiert ist. Es ist jedoch auch denkbar, dass ein tragbares und/oder mobiles Datenverarbeitungs- und/oder Kommunikationsgerät als Ausgabegerät verwendet wird, das in dem Innenraum des Fahrzeugs vorübergehend angeordnet und auch wieder entfernt werden kann und bspw. als Mobiltelefon, Handy oder Smartphone ausgebildet ist, wobei ein derartiges Ausgabegerät auch unabhängig von dem Fahrzeug genutzt werden kann.

Die Daten für die akustischen Signale können über eine Leitung für Daten und/oder über Funk, bspw. Bluetooth, WLAN bzw. WiFi, oder eine Mobiltelefonverbindung zu dem Ausgabegerät übertragen werden.

Außerdem kann die elektrische Energie über eine Leitung für elektrische Energie und/oder induktiv zu der Batterie des Fahrzeugs übertragen werden.

In Ausgestaltung wird ein Kabel verwendet, das die Leitung für die Daten und die Leitung für elektrische Energie aufweist bzw. umfasst.

Bei dem Verfahren können zusätzlich Daten für visuelle Signale über die zweite Verbindung von der Datenquelle zu dem Ausgabegerät übertragen werden, wobei von einem Monitor bzw. Bildschirm bzw. Display des Ausgabegeräts auf Grundlage der empfangenen Daten optische Signale in den Innenraum des Fahrzeugs ausgegeben werden, wobei die optischen Daten und/oder Signale Informationen zu dem Ladevorgang umfassen können.

Das erfindungsgemäße System ist zum Laden einer Batterie eines Fahrzeugs ausgebildet, wobei das System eine Ladestation und ein Ausgabegerät aufweist, wobei die Ladestation eine elektrische Energiequelle und eine Datenquelle aufweist bzw. umfasst, wobei das Fahrzeug die Batterie aufweist, wobei das Ausgabegerät zumindest vorübergehend bzw. temporär in einem Innenraum des Fahrzeugs anzuordnen bzw. anordenbar bzw. angeordnet und zur Ausgabe von akustischen Signalen ausgebildet ist. Zwischen der Energiequelle der Ladestation und der Batterie des Fahrzeugs ist eine erste Verbindung zur Übertragung von elektrischer Energie bereitstellbar bzw. bereitzustellen, wobei zwischen der Datenquelle der Ladestation und dem Ausgabegerät in dem Fahrzeug eine zweite Verbindung zur Übertragung von Daten bereitstellbar bzw. bereitzustellen ist. Dabei ist die erste Verbindung dazu ausgebildet, die elektrische Energie von der Energiequelle zu der Batterie zu übertragen. Die zweite Verbindung ist dazu ausgebildet, im Wesentlichen gleichzeitig bzw. zugleich Daten für akustische Signale von der Datenquelle zu dem in dem Innenraum angeordneten Ausgabegerät zu übertragen, wobei das Ausgabegerät dazu ausgebildet ist, auf Grundlage der empfangenen Daten akustische Signale in den Innenraum des Fahrzeugs auszugeben, bspw. zu senden und/oder auszustrahlen.

Die vorgestellte Ladestation als Teil des Systems ist zum Laden der Batterie des Fahrzeugs ausgebildet, wobei das Fahrzeug mindestens eine Elektromaschine aufweist, der aus der Batterie des Fahrzeugs elektrische Energie bereitgestellt wird, die von der Elektromaschine in mechanische Energie gewandelt wird, wobei das Fahrzeug durch diese mechanische Energie angetrieben bzw. fortbewegt wird. Die Batterie des Fahrzeugs kann auch als Traktionsbatterie bezeichnet werden und/oder ausgebildet sein. Das Fahrzeug kann als Elektrofahrzeug oder Hybridfahrzeug ausgebildet sein und/oder bezeichnet werden.

Während dem Ladevorgang zum Laden der Batterie werden dem in dem Innenraum des Fahrzeugs angeordneten Ausgabegerät zusätzlich die Daten für die akustischen Signale und ggf. auch für die visuellen bzw. optischen Signale bereitgestellt und dem Fahrer im Innenraum des Fahrzeugs während einer Zeit, bspw. Wartezeit, für den Ladevorgang angezeigt. Somit können dem Fahrer als akustische Signale Toninformationen und als optische Signale Bildinformationen angezeigt werden. Inhalte dieser akustischen Toninformationen und optischen Bildinformationen umfassen bspw. Werbung, Musik, Nachrichten, aber auch Informationen über den aktuell durchgeführten Ladevorgang der Batterie. Derartige Informationen zu dem Ladevorgang können zyklisch oder situationsabhängig akustisch übertragen werden. Derartige Informationen umfassen bspw. einen Status des Ladevorgangs oder einen eventuell auftretenden Fehler während des Ladevorgangs. Dem Fahrer als Kunden kann weiterhin auch ein vollumfängliches Programm präsentiert werden, das neben Nachrichten bspw. auch Werbung oder Spielfilme umfassen kann. Ein dabei gelieferter bzw. bereitgestellter akustischer und/oder optischer Inhalt kann dem Fahrer als Kunden bspw. über eine Rechnung für die beim Ladevorgang bereitgestellte elektrische Energie oder einem Werbetreibenden berechnet werden.

Es ist vorgesehen, dass die Daten zu den akustischen Signalen und ggf. auch zu den optischen Signalen zu dem Ausgabegerät in dem Innenraum des Fahrzeugs übertragen werden, wobei das Ausgabegerät zumindest während des Ladevorgangs in dem Innenraum des Fahrzeugs angeordnet ist, falls das Ausgabegerät bspw. als Mobiltelefon oder tragbarer Computer ausgebildet ist. Es ist jedoch auch möglich, das das Ausgabegerät in dem Innenraum fest installiert und somit permanent angeordnet ist. Die Übertragung der Daten wird mit einem als Ladekabel ausgebildeten und/oder zu bezeichnenden Kabel durchgeführt, das neben einer Leitung als Verbindung für die elektrische Energie auch eine Leitung als Verbindung für die drahtgebundene Übertragung der Daten umfasst. Es ist jedoch auch eine Übertragung der Daten über elektromagnetische Wellen als Verbindung denkbar, wobei bspw. Bluetooth, WiFi bzw. WLAN oder ein FM-DAB-Transmitter zum Senden, Übertragen und/oder Empfangen der Daten verwendet wird.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.

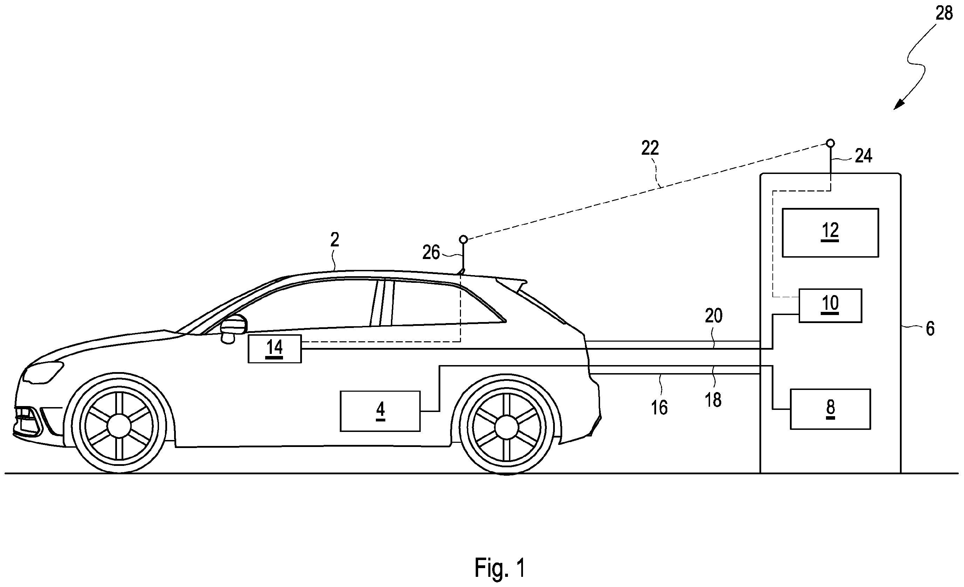

Figur 1 zeigt in schematischer Darstellung eine Ausführungsform des erfindungsgemäßen Systems bei Durchführung einer Ausführungsform des erfindungsgemäßen Verfahrens.

Figur 1 zeigt in schematischer Darstellung ein elektrisch angetriebenes Fahrzeug 2, das auch als elektrisches Kraftfahrzeug bzw. Auto ausgebildet sein und/oder bezeichnet werden kann. Zum Versorgen einer Elektromaschine des Fahrzeugs 2 weist dieses eine Batterie 4, bspw. eine sogenannte Traktionsbatterie, auf.

Figur 1 zeigt auch eine Ladestation 6, die wiederum eine elektrische Energiequelle 8 und eine Datenquelle 10 aufweist. Ferner weist die Ladestation 6 auch ein Ausgabemodul 12 mit einem Monitor und einem Lautsprecher zur optischen und akustischen Anzeige von Signalen auf. In Figur 1 ist auch gezeigt, dass in einem Innenraum des Fahrzeugs 2 ein Ausgabegerät 14 angeordnet ist, das auch als Anzeigegerät ausgebildet sein und/oder bezeichnet werden kann. Die Ladesäule 6 und ihre Komponenten und zumindest das Ausgabegerät 14 in dem Fahrzeug 2 sind als Komponenten der Ausführungsform des erfindungsgemäßen Systems 28 ausgebildet.

Bei einer Durchführung der Ausführungsform des erfindungsgemäßen Verfahrens wird hier das Fahrzeug 2 über ein Kabel 16, bspw. ein Ladekabel, mit der Ladestation 6 verbunden. Dieses Kabel 16 umfasst einerseits eine erste hier als Leitung ausgebildete Verbindung 18 und eine zweite ebenfalls als Leitung ausgebildete zweite Verbindung 20. Dabei wird die Batterie 4 über die erste Verbindung 18 mit der Energiequelle 8 der Ladestation 6 verbunden. Das in dem Innenraum des Fahrzeugs 2 angeordnete Ausgabegerät 14 wird weiterhin über die zweite Verbindung 20 mit der Datenquelle 10 der Ladestation 6 verbunden.

Bei der Ausführungsform des Verfahrens wird zur Durchführung eines Ladevorgangs der Batterie 4 ausgehend von der Energiequelle 8 elektrische Energie über die erste Verbindung 18 zu der Batterie 4 übertragen. Währenddessen werden von der Datenquelle 10 über die zweite Verbindung 20 zusätzlich Daten zu dem Ausgabegerät 14 übertragen. Diese Daten umfassen Daten für akustische Signale und ggf. auch Daten für optische Signale. Die besagten Daten werden von dem Ausgabegerät 14 empfangen. Weiterhin werden von dem Ausgabegerät 14 aus den Daten für die akustischen Signale die akustischen Signale gewandelt, erzeugt und/oder bereitgestellt sowie über einen Lautsprecher in den Innenraum des Fahrzeugs 2 gesendet. Entsprechend können auch von dem Ausgabegerät 14 die Daten für die optischen Signale in die optischen Signale umgewandelt und von bzw. auf einem Monitor, Bildschirm bzw. Display des Ausgabegeräts 14 dargestellt werden.

Es ist üblicherweise vorgesehen, dass das Ausgabegerät 14 in dem Innenraum des Fahrzeugs 2 fest installiert ist. Im Fall eines derartigen fest installierten Ausgabegeräts 14 können die Daten für die akustischen und eventuell auch optischen Signale nicht nur über die erste Verbindung 20, die hier als drahtgebundene Leitung ausgebildet ist, sondern auch über eine alternative oder ergänzende weitere zweite Verbindung 22 über elektromagnetische Wellen bzw. über Funk drahtlos übertragen werden. Hierzu weist die Ladestation 6 zusätzlich eine Antenne 24 auf. Entsprechend ist das Ausgabegerät 14 auch mit einer Antenne 26, hier einer Antenne 26 des Fahrzeugs 2, verbunden. Hierbei werden die Daten zwischen den beiden Antennen 24, 26 und somit zwischen der Datenquelle 10 und dem Ausgabegerät 14 übertragen.

In weiterer alternativer Ausgestaltung ist es möglich, dass das Ausgabegerät 14 als mobiles bzw. tragbares Ausgabegerät 14 ausgebildet ist, wobei es sich bspw. um ein Mobiltelefon oder ein Smartphone handeln kann, das bei der Ausführungsform des erfindungsgemäßen Verfahrens zumindest während des Ladevorgangs in dem Innenraum des Fahrzeugs 2 angeordnet wird. In diesem Fall ist die Antenne 26 als Antenne 26 dieses tragbaren Ausgabegeräts 14 zum Empfangen der Daten der Datenquelle 10 ausgehend von der Antenne 24 über die Verbindung 22 sowie zur Weitergabe der Daten an das Ausgabegerät 14 ausgebildet.

### BEZUGSZIFFERN:

- 2: Fahrzeug
- 4: Batterie
- 6: Ladestation
- 8: Energiequelle
- 10: Datenquelle
- 12: Ausgabemodul
- 14: Ausgabegerät
- 16: Kabel
- 18, 20, 22: Verbindung
- 24, 26: Antenne
- 28: System

## Patentansprüche

1. Verfahren zum Laden einer Batterie (4) eines Fahrzeugs (2) unter Verwendung einer Ladestation (6), wobei die Ladestation (6) eine elektrische Energiequelle (8) und eine Datenquelle (10) aufweist, wobei in einem Innenraum des Fahrzeugs (2) ein Ausgabegerät (14) angeordnet wird, das zur Ausgabe von akustischen Signalen ausgebildet ist, wobei zwischen der Energiequelle (8) der Ladestation (6) und der Batterie (4) des Fahrzeugs (2) eine erste Verbindung (18) zur Übertragung von elektrischer Energie bereitgestellt wird, wobei zwischen der Datenquelle (10) der Ladestation (6) und dem Ausgabegerät (14) in dem Fahrzeug (2) eine zweite Verbindung (20, 22) zur Übertragung von Daten bereitgestellt wird, wobei die elektrische Energie über die erste Verbindung (18) von der Energiequelle (8) zu der Batterie (4) übertragen wird, und wobei Daten für akustische Signale über die zweite Verbindung (20, 22) von der Datenquelle (10) zu dem Ausgabegerät (14) übertragen werden, wobei von dem Ausgabegerät (14) auf Grundlage der empfangenen Daten akustische Signale ausgegeben werden.

2. Verfahren nach Anspruch 1, bei dem die akustischen Daten und/oder Signale Informationen zu einem Ladevorgang der Batterie (4) umfassen.

3. Verfahren nach Anspruch 1 oder 2, bei dem ein Ausgabegerät (14) verwendet wird, das mindestens einen Lautsprecher und/oder mindestens eine Schallquelle aufweist, der bzw. die dazu ausgebildet ist, die Daten für die akustischen Signale in die akustischen Signale zu wandeln und/oder umzuwandeln.

4. Verfahren nach einem der voranstehenden Ansprüche, bei dem die Daten für die akustischen Signale über eine Leitung als Verbindung (20) für die Daten und/oder über Funk, insbesondere Bluetooth, WLAN bzw. WiFi, oder eine Mobiltelefonverbindung als Verbindung (22) für die Daten zu dem Ausgabegerät (14) übertragen werden.

5. Verfahren nach einem der voranstehenden Ansprüche, bei dem die elektrische Energie über eine Leitung für elektrische Energie und/oder induktiv zu der Batterie (4) übertragen wird.

6. Verfahren nach Anspruch 5 und 6, bei dem ein Kabel (16) verwendet wird, das die Leitung für die Daten und die Leitung für elektrische Energie umfasst.

7. Verfahren nach einem der voranstehenden Ansprüche, bei dem zusätzlich Daten für visuelle Signale über die zweite Verbindung (20, 22) von der Datenquelle (10) zu dem Ausgabegerät (14) übertragen werden.

8. System zum Laden einer Batterie eines Fahrzeugs, wobei das System (28) eine Ladestation (6) und ein Ausgabegerät (14) aufweist, wobei die Ladestation (6) eine elektrische Energiequelle (8) und eine Datenquelle (10) aufweist, wobei das Ausgabegerät (14) in einem Innenraum des Fahrzeugs (2) anzuordnen bzw. anordenbar und zur Ausgabe von akustischen Signalen ausgebildet ist, wobei zwischen der Energiequelle (8) der Ladestation (6) und der Batterie (4) des Fahrzeugs (2) eine erste Verbindung (18) zur Übertragung von elektrischer Energie bereitzustellen bzw. bereitstellbar ist, wobei zwischen der Datenquelle (10) der Ladestation (6) und dem Ausgabegerät (14) in dem Fahrzeug (2) eine zweite Verbindung (220, 22) zur Übertragung von Daten bereitzustellen bzw. bereitstellbar ist, wobei die erste Verbindung (18) dazu ausgebildet ist, die elektrische Energie von der Energiequelle (8) zu der Batterie (4) zu übertragen, und wobei die zweite Verbindung (20, 22) dazu ausgebildet ist, Daten für akustische Signale von der Datenquelle (10) zu dem Ausgabegerät (14) zu übertragen, wobei das Ausgabegerät (14) dazu ausgebildet ist, auf Grundlage der empfangenen Daten akustische Signale auszugeben.
